# EUROPEAN PATENT SPECIFICATION

(11) **EP 3 268 263 B1**
(45) Date of publication and mention of the grant of the patent: **19.12.2018**
(21) Application number: 16714529.1
(22) Date of filing: 23.02.2016
(51) Int. Cl.: B62D 7/18, B62D 15/02

(54) **SINGLE-SUSPENDED-WHEEL STEERING SYSTEM COMPRISING A ROTATION SENSOR DEVICE**
LENKSYSTEM MIT EINEM AUFGEHÄNGTEN RAD MIT EINER DREHSENSOREINRICHTUNG
SYSTÈME DE DIRECTION À ROUE SUSPENDUE UNIQUE COMPRENANT UN DISPOSITIF DE CAPTEUR DE ROTATION

(30) Priority: 13.03.2015 IT BG20150017
(43) Date of publication of application: 17.01.2018
(73) Proprietor: SAME DEUTZ-FAHR ITALIA S.p.A., 24047 TREVIGLIO (BG) (IT)
(72) Inventor: HERAUDET, Laurent, 24047 Treviglio (Bergamo) (IT); STUCCHI, Luca, 24047 Treviglio (Bergamo) (IT)
(74) Representative: Gamba, Alessandro
(86) International application number: PCT/IB2016/050975
(87) International publication number: WO 2016/147067

(56) References cited:
- EP-A1- 1 726 512
- EP-A2- 1 195 314

## Description

### Field of application

This invention relates to a single-suspended-wheel steering system of a vehicle for agricultural use and a tractor or riding mower comprising said single-suspended-wheel system.

In other words, in this description, "single-suspended-wheel steering system" identifies a system with independent wheel suspensions.

Furthermore, in the following description, the phrase "vehicles for agricultural use" refers to those vehicles typically suitable to move and operate on agricultural land; the term "tractor" means both agricultural tractors and, more in general, large machines, such as earth moving machines derived from agricultural tractors and, in general, specific machines power operations, such as actions directly on the ground, such as ploughing or the loading/unloading of agricultural material; the term "riding mower" refers to that type of vehicle, typically compact in size, for example used in the viticulture, and therefore typically suitable to move in the space between two adjacent rows.

### State of the art

The single-suspended-wheel steering systems currently known provide the vehicle a plurality of advantages such as large steering angles, an effective shock absorption of the vehicle, the independence of the wheels on the ground in such a way to deal with situations in which only three wheels are on the ground while one is raised from it, i.e., the situation that typically occurs with solutions with rigid axle.

However, the known single-wheel-suspended steering systems have the main problem of difficulty of detecting the steering angle. However, this detection is necessary to allow some basic functions of the vehicle for agricultural use such as, for example, the disengagement of the drive wheels, or the management of automated movement of the vehicle by means of movement systems with GPS.

In some typical prior art solutions, this issue has been resolved by maintaining the mechanical components unchanged and interfacing them with a specific, particularly complex sensor system. However, these particularly complex sensor solutions are unreliable and subject to breakage, particularly in the light of the fact that find application in demanding environments such as agriculture.

In further typical prior art solutions, this issue has instead been resolved by proposing particularly complex mechanical components interacting with a simpler sensor system; however, these solutions have undesirable overall dimensions and require complex manufacturing steps. An example of said prior art solution is known in document: EP1726512.

### Presentation of the invention

The objective of this invention is to provide a single-suspended-wheel steering system that overcomes the above-mentioned problem typical of the prior art by providing a single-suspended-wheel steering system in which the detection of the steering angle of the wheel is effective and reliable.

This objective is achieved by a single-suspended-wheel steering system realised according to claim 1, and by a tractor or riding mower in accordance with claim 14. The dependent claims describe further variants of preferred embodiments.

### Description of the drawings

The characteristics and advantages of a single-suspended-wheel steering system according to this invention will be apparent from the following description, given by way of non-limiting example, in accordance with the accompanying figures, in which:

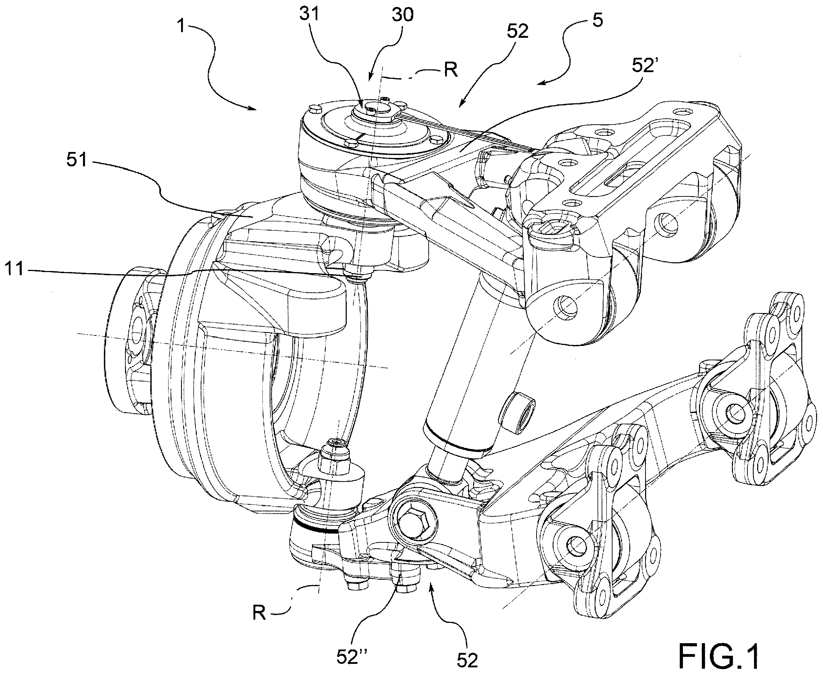

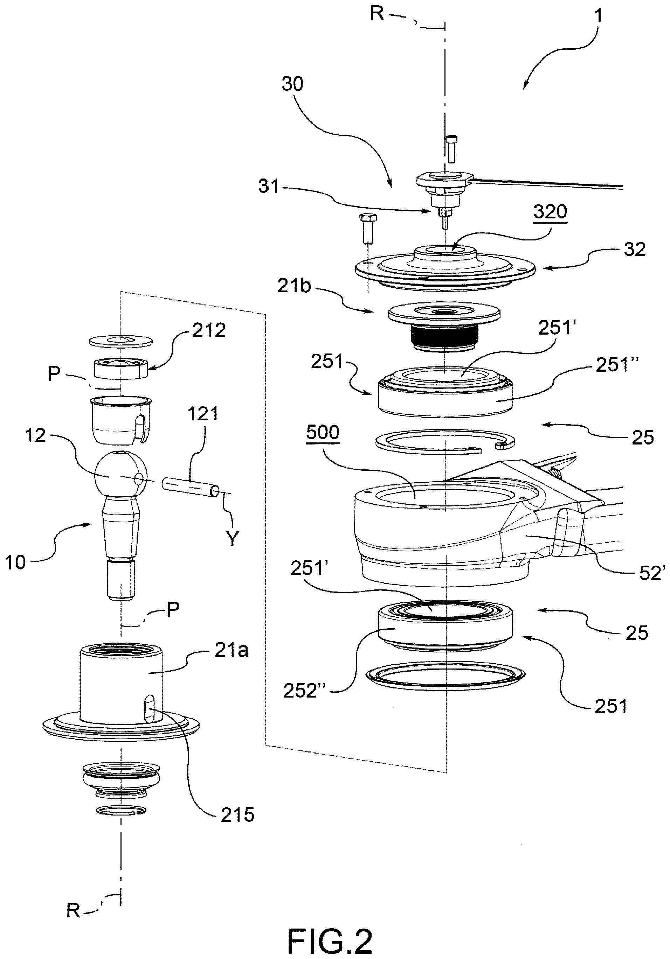

- Figure 1 shows a perspective view of a single-suspended-wheel steering system covered by this invention

In a preferred embodiment, the single-suspended-wheel steering system 5 is a drive wheel; in other words, it is connected to the transmission means of the vehicle to transmit the motion to the ground through the respective wheel assembly. In the embodiment in which the single-suspended-wheel steering system is in the front, it thus refers to vehicles such as to present, directly or optionally, traction of four drive wheels.

According to a preferred embodiment, the system 5 comprises a wheel, carrier 51 for the wheel assembly and at least one arm 52 for the support and shock absorption of the wheel carrier 51, preferably the system 5 is a mechanical suspension system with quadrilateral structure having an upper arm 52' and a lower arm 52". The respective wheel carrier 51 is thus supported superiorly by the upper arm 52' and inferiorly by the lower arm 52".

According to a preferred embodiment, the system 5 also comprises a joint group 1. suitable to allow the engagement between wheel carrier 51 and respective arm 52. The joint group 1 allows rotation of the wheel carrier 51 relative to the arm 52 about an axis of rotation R-R.

The joint group 1 comprises a pin 10 that extends along a pivot axis P-P between a first end 11 and a second spherical end 12.

According to a preferred embodiment, the first end 11 is suitable to be fixed to the wheel carrier 51 in such a way that a rotation of the wheel carrier 51 corresponds to a rotation of the pin 10.

According to a further embodiment, the first end 11 is suitable to be fixed to the arm 52, so as to maintain its fixed angular position with respect to the pivot axis P-P pin and with respect to the axis of rotation R-R, while the wheel carrier 51 is suitable to rotate around it.

In other words, the first end 11 is suitable to be connected to the wheel carrier 51 or to the arm 52 by appropriate means such as a screw-bolt system, or by means of threading directly formed on it.

According to a preferred embodiment, the second spherical end 12 is instead housed in the arm 52 or is instead housed in the wheel carrier 51.

In a further preferred embodiment, the joint group 1 respectively comprises a wheel carrier flange 510 and/or an arm flange 520 suitable to be respectively engaged by the first or second end of the pin 10 and in turn fixed to the wheel carrier 51 and to the arm 52 for example by means of appropriate locking means, for example by means of screws.

The joint group 1 comprises a

In a preferred embodiment, the single-suspended-wheel steering system 5 is a drive wheel; in other words, it is connected to the transmission means of the vehicle to transmit the motion to the ground through the respective wheel assembly. In the embodiment in which the single-suspended-wheel steering system is in the front, it thus refers to vehicles such as to present, directly or optionally, traction of four drive wheels.

According to a preferred embodiment, the system 5 comprises a wheel carrier 51 for the wheel assembly and at least one arm 52 for the support and shock absorption of the wheel carrier 51, preferably the system 5 is a mechanical suspension system with quadrilateral structure having an upper arm 52' and a lower arm 52". The respective wheel carrier 51 is thus supported superiorly by the upper arm 52' and inferiorly by the lower arm 52".

According to a preferred embodiment, the system 5 also comprises a joint group 1 suitable to allow the engagement between wheel carrier 51 and respective arm 52. Preferably, the joint group 1 allows rotation of the wheel carrier 51 relative to the arm 52 about an axis of rotation R-R.

Preferably, the joint group 1 comprises a pin 10 that extends along a pivot axis P-P between a first end 11 and a second spherical end 12.

According to a preferred embodiment, the first end 11 is suitable to be fixed to the wheel carrier 51 in such a way that a rotation of the wheel carrier 51 corresponds to a rotation of the pin 10.

According to a further embodiment, the first end 11 is suitable to be fixed to the arm 52, so as to maintain its fixed angular position with respect to the pivot axis P-P pin and with respect to the axis of rotation R-R, while the wheel carrier 51 is suitable to rotate around it.

In other words, the first end 11 is suitable to be connected to the wheel carrier 51 or to the arm 52 by appropriate means such as a screw-bolt system, or by means of threading directly formed on it.

According to a preferred embodiment, the second spherical end 12 is instead housed in the arm 52 or is instead housed in the wheel carrier 51.

In a further preferred embodiment, the joint group 1 respectively comprises a wheel carrier flange 510 and/or an arm flange 520 suitable to be respectively engaged by the first or second end of the pin 10 and in turn fixed to the wheel carrier 51 and to the arm 52 for example by means of appropriate locking means, for example by means of screws.

Preferably, the joint group 1 comprises a rotation device 20 comprising a central body 21 in which is fitted and integrally connected the second spherical end 12 of the pin 10 and rotation means 25 suitable to allow the free rotation of the central body 21 around the axis of rotation R-R.

In other words, as a function of the different embodiments, the wheel carrier 51 or the arm 52 and/or respectively the wheel carrier flange 510 or the arm flange 520 have, along the axis of rotation R-R, an axially symmetric housing cavity 500; said housing cavity substantially contains the joint group 1 in its entirety; in fact, only a portion of the pin 10 extends to the outside of said housing cavity 500, in particular the first end 11.

Preferably, the central body 21 comprises a ball housing 210 delimited by the housing walls 210', in which the second spherical end 12 is received.

According to a preferred embodiment, the second spherical end 12 is connected to the central body 21 by means of a transverse pin 121 that extends along a transverse axis Y-Y perpendicular to the axis of rotation R-R and passing from the centre C of the second spherical end 12. The pin 121 engages said housing walls 210' so that the pin 10 is free to rotate around said transverse axis Y-Y. In other words, the pin 121 prevents the free rotation of the second spherical end 12 around the centre C in all degrees of freedom.

According to a preferred embodiment, the central body 21, on the housing walls 210', has two pin slots 215 radially opposite with respect to the axis of rotation R-R, which extend parallel to it, in which the ends of the transverse pin 121 are housed free to move.

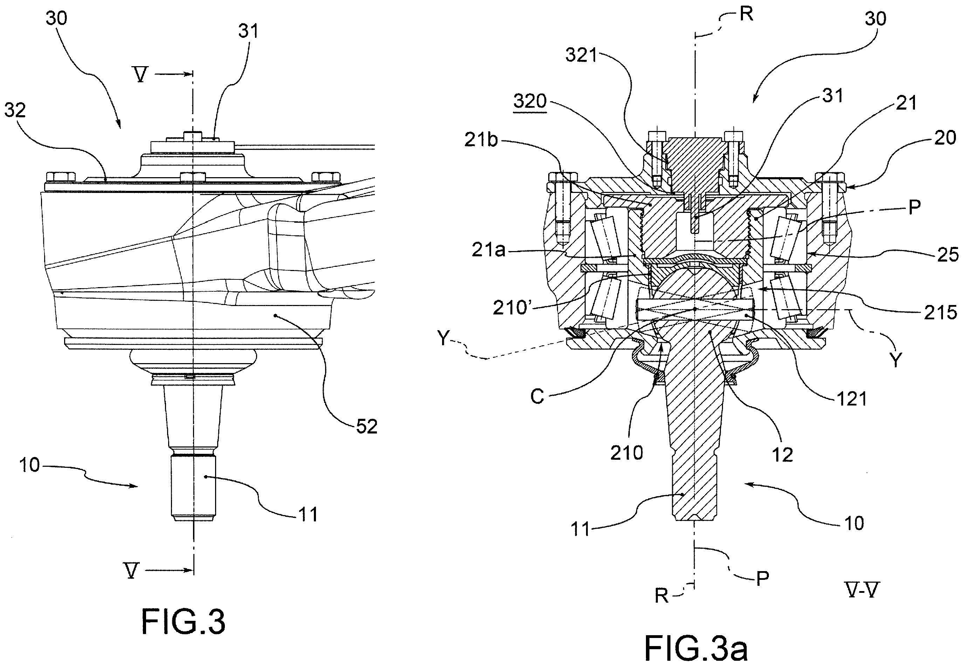

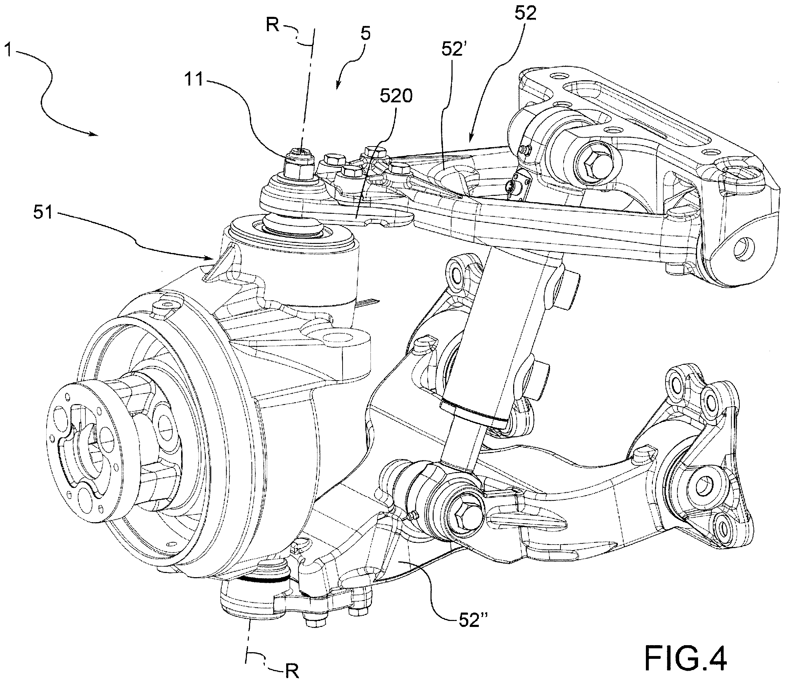

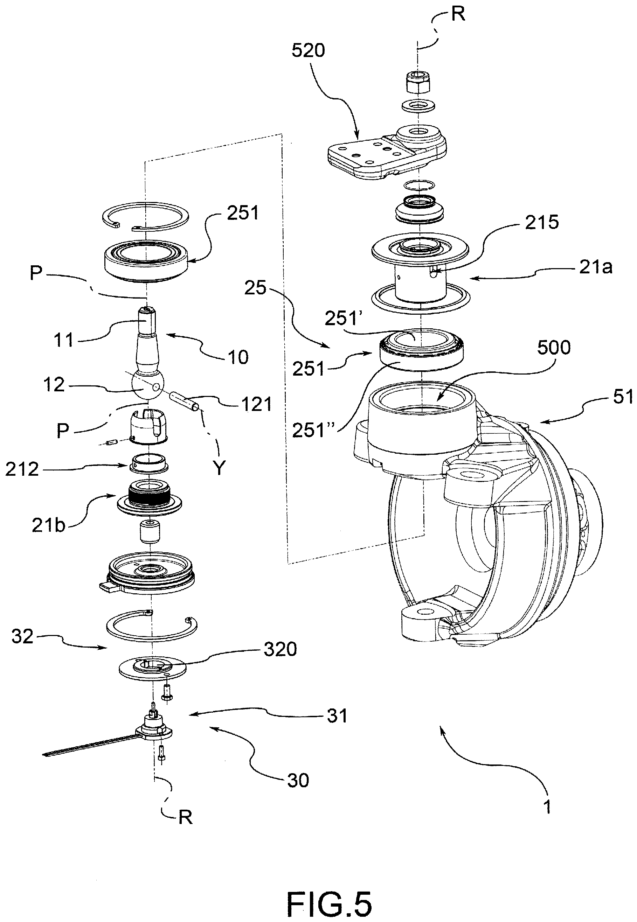

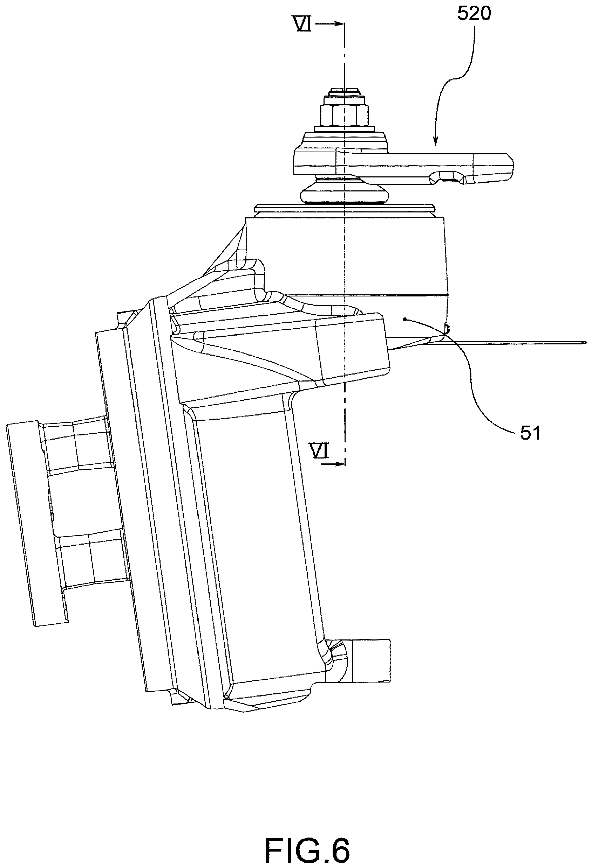

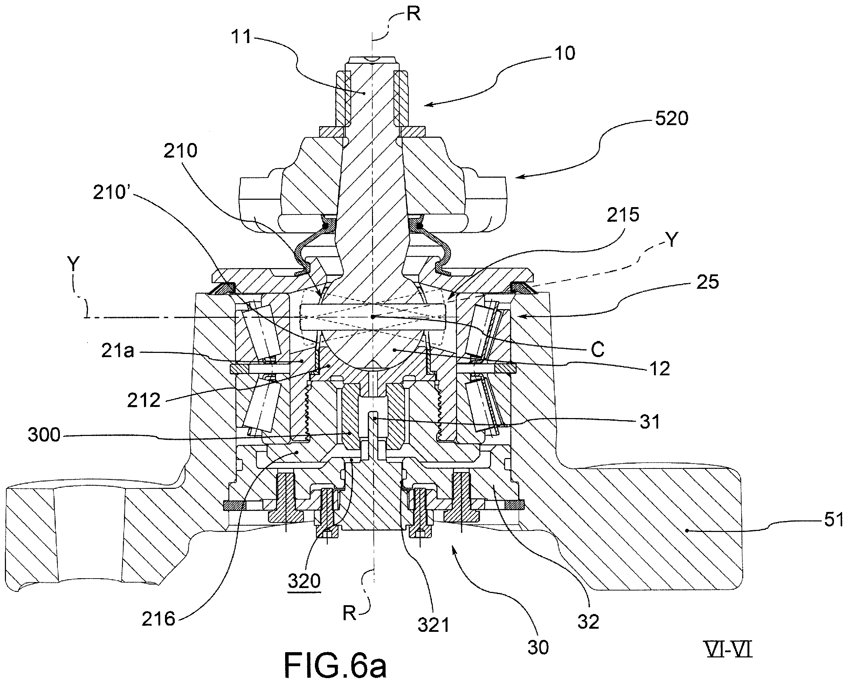

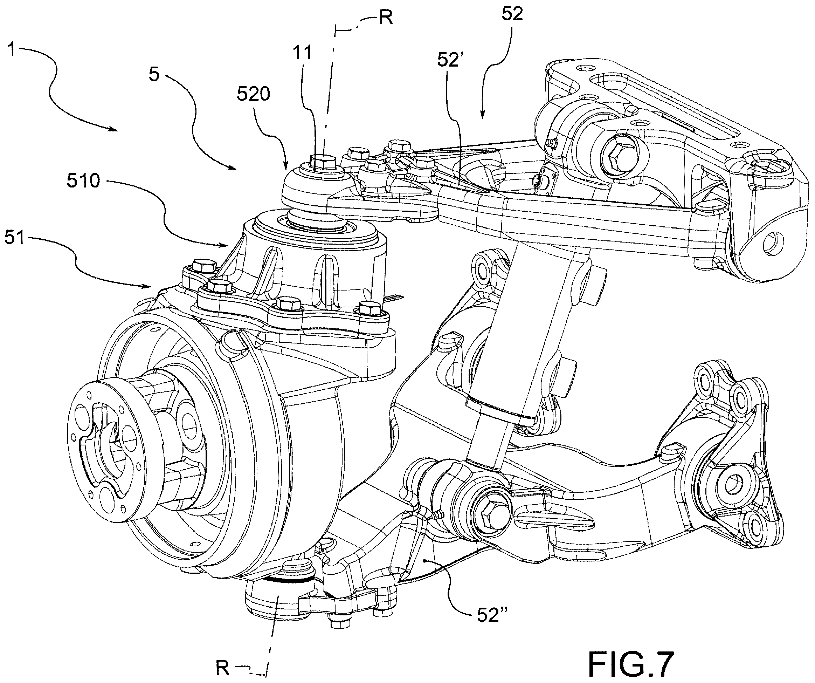

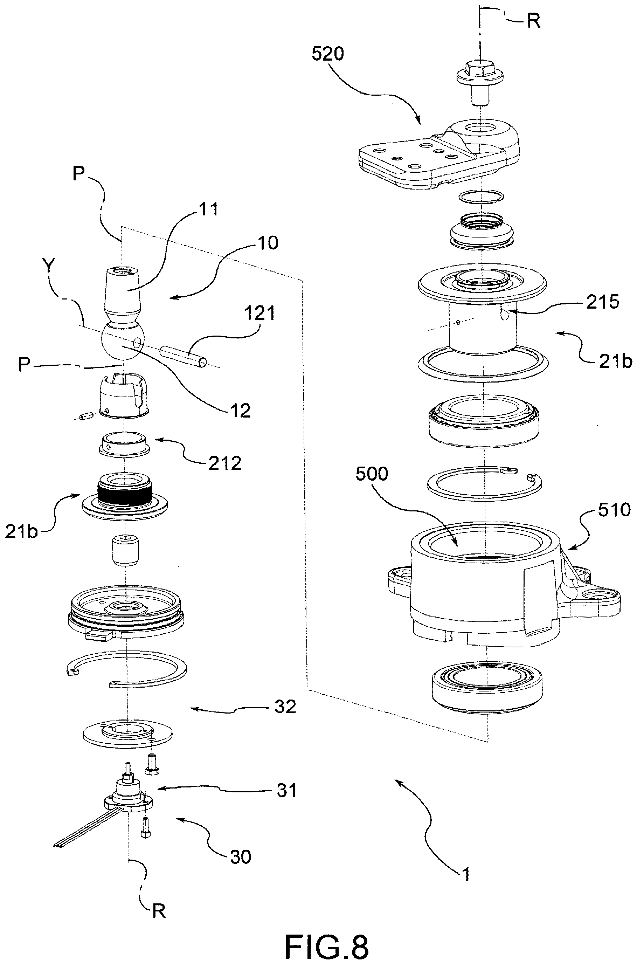

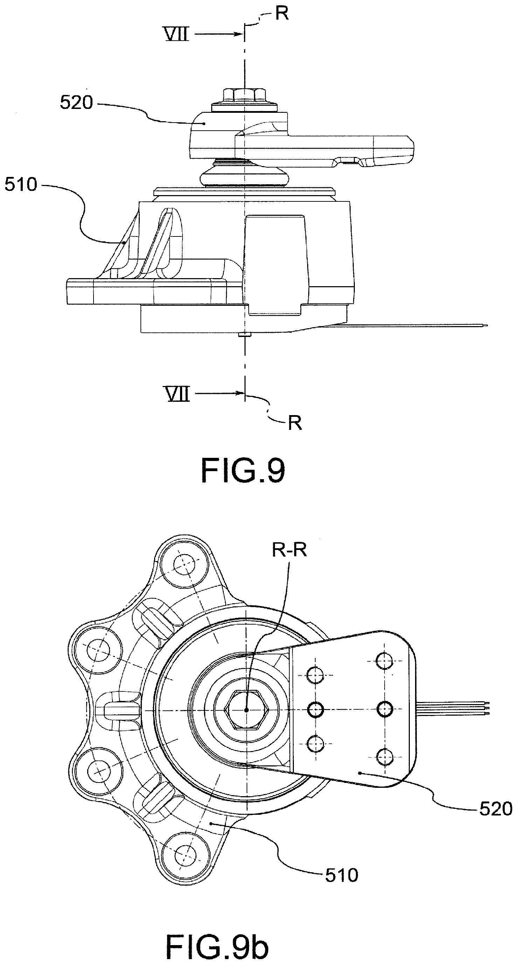

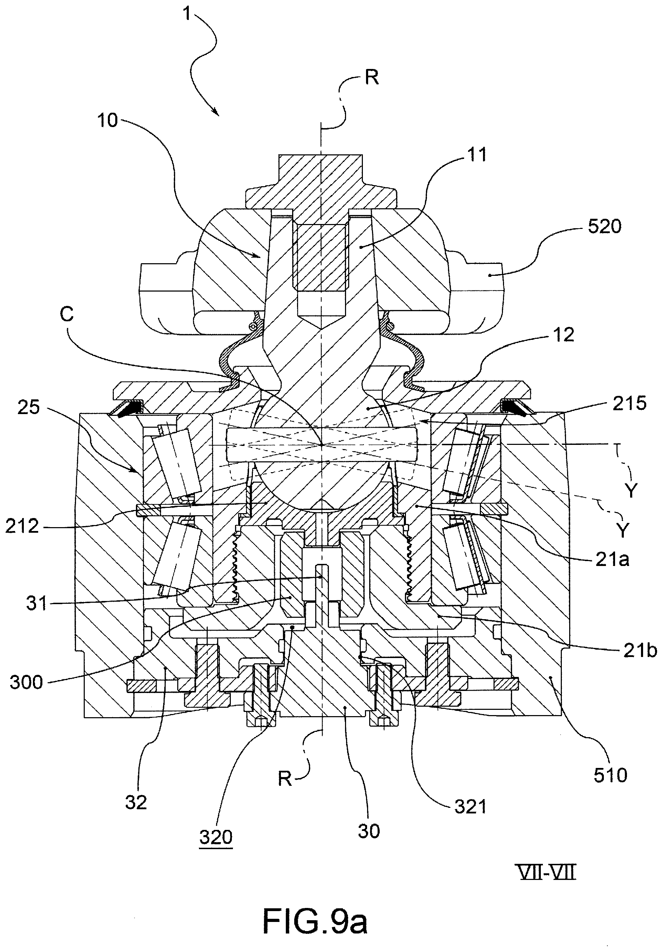

In other words, the two pin slots 215 allow movements of the pin 121 such as to recover, for example, shaking of the wheel carrier or mounting tolerances of the wheel carrier to the arm. Note that the angular movement of the pin 121 in the slots 215 is shown by the dashed lines in Figures 3a, 6a, and 9a.

In addition, preferably, the central body 21 comprises an abutment element 212 suitable to keep the centre C fixed along the axis of rotation R-R. In other words, the central body 21 has an abutment element 212 inside it on which the second spherical end 12 acts, free to move; in fact, the abutment element 212 has a concave shape such as to allow the housing and support of a portion of the second spherical end 12. Preferably, the curvature of said concave portion has the same radius as the second spherical end 12, i.e., the distance from the centre C to the outer wall of the second spherical end 12.

According to a preferred embodiment, the abutment element 212 is made of an anti-friction material, i.e., with a low coefficient of friction, preferably, made of a material selected from the group of polymers or metals with a low coefficient of friction or low-friction, for example the bronze alloys.

According to a preferred embodiment, the rotation means 25 comprise one or more bearings 251, having the inner surface 251' operatively connected to the central body 21 and the outer surface 251" operatively connected to the component in which the rotation device 20 is housed.

In a preferred embodiment, the rotation means 25 comprise two conical roller bearings 251 arranged in such a way that the disposition angles of the cones are opposite and facing the centre of the joint group 1 where the second spherical end 12 is preferably placed. However, embodiments are known in which the rotation means 25 comprise one or more ball or sliding bearings.

In other words, the rotation means 25 are suitable to manage both the axial loads and the radial loads.

According to a preferred embodiment, the central body 21 is constituted by two main portions.

Preferably, the central body 21 comprises a first portion 21a and a second portion 21b suitable to engage each other along the axis of rotation R-R, in such a way as to delimit the ball housing 210. In other words, along the vertical, the first portion 21a and second portion 21b are suitable to engage each other, for example by screwing one to the other. Preferably, the first portion 21a and second portion 21b are flanged radially in such a way as to enclose the rotation means 25 in a sandwich between the respective flanges.

According to a preferred embodiment, the joint group also comprises a rotation sensor device 30 suitable to detect the angle of rotation of the central body 21 around said axis of rotation R-R; in other words, the rotation sensor device 30 is suitable to detect the rotation angle of the wheel carrier 51, i.e., the steering angle of the vehicle.

As a function of the different embodiments, the rotation sensor device 30 is respectively fixed to the arm 52 or the wheel carrier 51 and/or to the wheel carrier flange 510 or to the arm flange 520.

Preferably, the rotation sensor device 30 comprises a detection element 31 positioned on the axis of rotation R-R. In other words, the detection element 31 is located in the single-suspended-wheel steering system 5 along the rotation axis R-R system.

In a preferred embodiment, the rotation sensor device 30 comprises a flange 32 for fixing the rotation sensor device 30 to the arm 52; the fixing is executable with appropriate means for example using specific locking screws screwed through the flange 32 on the arm 52. In further embodiments, the flange 32 is, instead, suitable to carry out the fixing of the rotation sensor device to the wheel carrier 51 or to the wheel carrier flange 510.

Preferably, the flange 32 has along the rotation axis R-R a detection aperture 320 through which the detection element 31 is inserted to interface with the central body 21.

In a preferred embodiment, the detection element 31 interfaces with the second portion 21b.

Preferably, the flange 32 has, along the axis of rotation R-R, a seat 321 for housing the detection element 31, wherein said seat 321 is in communication with the detection aperture 320.

According to a preferred embodiment, the detection element 31 is suitable for detecting angles of rotation around the axis of rotation R-R, starting from a zero position, up to ±90°, preferably up to ±60°.

In other words, the detection element 31 integrally housed in the respective seat 321, for example fixed by means of appropriate fixing means such as fixing screws screwed to the flange 32, is suitable, through the detection aperture 320, to detect the rotations of the flange 320 with respect to the central body 21.

In a preferred embodiment, the flange 32 and the rotation means 25 are suitable to support the central body 21, the pin 10, to the arm 52 or to the wheel carrier 51 or to the wheel carrier flange 510.

Therefore, as a function of the type of configuration, the detection element 31 is suitable to detect a rotation of the central body 21, for example induced by the pin 10 through the ping 121, with respect to the flange 320. Conversely, in other embodiments, the central body 21 is maintained in a fixed position by the pin 10, through the pin 121, and it is the flange 320 that is rotated: so, the detection element 31 is suitable to detect the relative rotation of the central body 21 with respect to the flange 320, i.e., the rotation of the flange 320 with respect to the central body 21.

In a preferred embodiment, the rotation sensor device 30 also comprises a realignment sleeve 300, suitable to recover any misalignments of the sensor with respect to the axis of rotation R-R, for example linked to mounting tolerances. In other words, the detection element 31 is suitable to detect the related movement of said sleeve 300.

Preferably, the realignment sleeve 300 is fixed to the central body 21.

In a preferred embodiment, the realignment sleeve 300 is made of an elastically yielding material, for example a polymeric rubber material.

Innovatively, the single-suspended-wheel steering system of this invention allows achieving the intended purpose of the invention, i.e., to provide a precise detection of the angle of rotation of the wheel carrier.

Advantageously, the single-suspended-wheel steering system is suitable to detect the steering angle without the need of important design and manufacturing distortions of the system itself, unlike what is the case in the state of the art solutions.

Moreover, advantageously, the detection is always reliable and correct in real time, since it is taken from the central body, without, instead, being conditioned by the relative movements of the ball joint; the use of the steering angle and the management of this information by specific systems such as that of the management of the four-wheel drive or that of movement with an automated system with GPS, is not vitiated by errors or by related movements.

A further advantage is that of having a single-suspended-wheel steering system in which the movement axes of the joint are isolated from each other and therefore the rotations are them are effectively measurable.

A still further advantage resides in the fact that the single-suspended-wheel steering system is rigid and strong, and therefore suitable to be used in hostile environments such as agriculture.

Moreover, advantageously, the joint group is not bulky and, instead, is suitable to be integrated in the solutions already known for example of suspension arms.

Advantageously, the single-suspended-wheel steering system can be integrated in solutions of vehicles such as tractors, i.e., of large dimensions and subject to important actions and reactions, for example with the ground.

In addition, advantageously, the single-suspended-wheel steering system can be integrated into solutions such as tractors in which the preservation of the overall dimensions is the main issue here effectively resolved.

In the embodiment in which the system comprises a joint group having specific flanges, a further advantage resides in the fact that the design and production of the components of the wheel carrier assembly and arm in that they must be provided with specific slots for the fixing of the respective flanges, while their design is not linked to the shape of the joint group and its housing in the respective components.

It is clear that one skilled in the art, in order to meet specific needs, may make changes to the single-suspended-wheel steering system, the tractor and the riding mower described above, all contained within the scope of protection defined by the following claims.

## Claims

1. A single-suspended-wheel-steering system (5) of a vehicle for agricultural use connected to a wheel group, wherein the system (5) comprises:
- a wheel carrier (51) for the wheel group;
- at least one arm (52) for the support and damping of the wheel carrier (51); and
- a joint group (1) suitable to allow the engagement between wheel carrier (51) and arm (52) for the rotation of the wheel carrier (51) relative to the arm (52) about an axis of rotation (R-R);
wherein the single-suspended-wheel steering system (5) is **characterized by** the fact that said joint group (1) comprises:
i) a pin (10) that extends along a pivot axis (P-P) between a first end (11) and a second spherical end (12);
ii) a rotation device (20) comprising a central body (21) in which is fitted and connected the second spherical end (12) of the pin (10) and rotation means (25) suitable to allow the free rotation of the central body (21) around the axis of rotation (R-R), wherein said central body (21) comprises a ball housing (210) delimited by housing walls (210'), wherein the second spherical end (12) is connected to the central body (21) by means of a transverse pin (121) which extends along a transverse axis (Y-Y) perpendicular to the axis of rotation (R-R) and passing from the centre (C) of the second spherical end (12) to engage said housing walls (210') in such a way that the pin (10) is free to rotate about said transverse axis (Y-Y);
iii) a rotation sensor device (30) comprising a detection element (31) positioned on the axis of rotation (R-R) and suitable to detect the rotation of the central body (21) around said axis of rotation (R-R) with respect to it;
wherein the joint group (1) is substantially housed in the wheel carrier (51) or arm (52), and the first end is integrally connected respectively to the arm (52) or to the wheel carrier (51).

2. System (5) according to claim 1, wherein the central body (21) has, radially opposite with respect to the axis of rotation (R-R), on the housing walls (210'), two pin slots (215) that extend parallel the axis of rotation (R-R), in which the ends of the transverse pin (121) are housed, free to move.

3. System (5) according to any of claims 1 or 2, wherein the central body (21) comprises an abutment element (212) suitable to keep the centre (C) fixed along the axis of rotation (R-R).

4. System (5) according to any of the preceding claims, wherein the rotation means (25) comprise one or more bearings (251), having the inner surface (251') operatively connected to the central body (21) and the outer surface (251") operatively connected to the component in which the rotation device is housed.

5. System (5) according to any of the preceding claims, wherein the central body (21) comprises a first portion (21a) and a second upper portion (21b) suitable to engage each other along the axis of rotation (R-R), in such a way as to delimit the ball housing (210).

6. System (5) according to any of the preceding claims, wherein the rotation sensor device (30) comprises a flange (32) for fixing the rotation sensor device (30), in which the flange (32) has, along the axis of rotation (R-R), a detector aperture (320) through which is inserted the detection element (31) to interface with the central body (21), preferably with a second portion (21b) .

7. System (5) according to claim 6, wherein the flange (32) has, along the axis of rotation (R-R), a seat (321) for housing the detection element (31), wherein said seat (321) is in communication with the detection aperture (320) .

8. System (5) according with any of claims 6 or 7, wherein the detection element (31) is suitable for detecting angles of rotation around the axis of rotation (R-R), starting from a zero position, up to ±90°, preferably up to ±60°.

9. System (5) according to any of claims 6 to 8, in combination with any of claims 1 to 5, wherein the flange (32) and rotation means (25) are suitable to support the central body (21), the pin (10) and the wheel carrier (51), on the respective component in which the rotation device (20) is housed.

10. System (5) according to any of the preceding claims, wherein the joint group (1) comprises an arm flange (520) suitable to be integrally connected with the arm (52) and suitable to be rotationally engaged with the first end (11) of the pin (10).

11. System (5) according to any of the preceding claims, wherein the joint group (1) comprises a wheel-carrier flange (510) suitable to be integrally connected with the wheel carrier (51) and suitable to house and be rotationally engaged with the rotation device (20) and with the rotation sensor device (30).

12. System (5) according to any of claims 9 to 11, wherein the wheel carrier group (51) or the arm (52) and/or the wheel carrier flange (510) or the arm flange (520) have, along the axis of rotation (R-R), an axially symmetric housing cavity (500), substantially for housing the joint group (1).

13. System (5) according to any of the preceding claims, wherein the wheel group, connected by a single-suspended-wheel steering system (5), is at the front.

14. Tractor or riding mower comprising a single-suspended-wheel steering system (5) according with any of the preceding claims, wherein the system is a drive system.

15. Tractor or riding mower according to claim 14, wherein the single-suspended-wheel steering system is placed on the front axle.

## Patentansprüche

1. Einzelaufhängungsradlenksystem (5) eines Fahrzeugs für landwirtschaftliche Zwecke, das mit einer Radgruppe verbunden ist, wobei das System (5) umfasst:
- ein Radträger (51) für die Radgruppe;
- zumindest einen Arm (52) zum Stützen bzw. Tragen und Dämpfung des Radträgers (51); und
- eine Gelenkgruppe (1), die geeignet ist, den Eingriff zwischen dem Radträger (51) und dem Arm (52) für die Drehung des Radträgers (51) relativ zu dem Arm (52) um eine Rotationsachse (R-R) zu ermöglichen;
wobei das Einzelaufhängungsradlenksystem (5) durch die Tatsache gekennzeichnet ist, dass die Gelenkgruppe (1) umfasst:
i) einen Stift (10), der sich entlang einer Schwenkachse (P-P) zwischen einem ersten Ende (11) und einem zweiten sphärischen Ende (12) erstreckt;
ii) eine Rotationsvorrichtung (20) umfassend einen zentralen Körper (21), in den das zweite sphärische Ende (12) des Stiftes (10) eingepasst und verbunden ist, und Rotationsmittel (25), die geeignet sind, die freie Drehung des zentralen Körpers (21) um die Rotationsachse (R-R) zu ermöglichen, wobei der zentrale Körper (21) ein von Gehäusewänden (210') begrenztes Kugelgehäuse (210) umfasst, wobei das zweite sphärische Ende (12) mit dem zentralen Körper (21) mittels eines Querstiftes (121) verbunden ist, der sich entlang einer Querachse (Y-Y) senkrecht zu der Rotationsachse (R-R) erstreckt und von dem Zentrum (C) des zweiten sphärischen Endes (12) ausgeht, um an den bzw. in die Gehäusewände derart einzugreifen (210'), dass sich der Stift (10) frei um die Querachse (Y-Y) drehen kann;
iii) eine Rotationssensorvorrichtung (30) umfassend ein Detektionselement (31), das auf der Rotationsachse (R-R) positioniert ist und geeignet ist, die Rotation des zentralen Körpers (21) um die Rotationsachse (R-R) in Bezug darauf zu detektieren;
wobei die Gelenkgruppe (1) im Wesentlichen in dem Radträger (51) oder Arm (52) untergebracht ist und das erste Ende integral mit dem Arm (52) bzw. dem Radträger (51) verbunden ist.

2. System (5) nach Anspruch 1, wobei der Zentralkörper (21) radial gegenüber bezüglich der Rotationsachse (R-R) an den Gehäusewänden (210') zwei Stiftschlitze (215) aufweist, die sich parallel zu der Rotationsachse (R-R) erstrecken, in denen die Enden des Querstiftes (121) untergebracht sind, und zwar frei beweglich.

3. System (5) nach einem der Ansprüche 1 oder 2, wobei der zentrale Körper (21) ein Anlageelement (212) umfasst, das geeignet ist, das Zentrum (C) entlang der Rotationsachse (R-R) fixiert zu halten.

4. System (5) nach einem der vorhergehenden Ansprüche, wobei die Rotationsmittel (25) ein oder mehrere Lager (251) umfassen, deren innere Fläche bzw. Oberfläche (251') operativ mit dem zentralen Körper (21) verbunden ist und deren äußere Fläche bzw. Oberfläche (251") operativ mit der Komponente verbunden ist, in der die Rotationsvorrichtung untergebracht ist.

5. System (5) nach einem der vorhergehenden Ansprüche, wobei der zentrale Körper (21) einen ersten Abschnitt (21a) und einen zweiten oberen Abschnitt (21b) umfasst, die geeignet sind, entlang der Rotationsachse (R-R) derart in Eingriff zu kommen, dass das Kugelgehäuse (210) begrenzt wird.

6. System (5) nach einem der vorhergehenden Ansprüche, wobei die Rotationssensorvorrichtung (30) einen Flansch (32) zum Fixieren der Rotationssensorvorrichtung (30) umfasst, bei der der Flansch (32) entlang der Rotationsachse (R-R) eine Detektoröffnung (320) aufweist, durch die das Detektionselement (31) zur Verbindung mit dem zentralen Körper (21) eingesetzt wird, vorzugsweise mit einem zweiten Abschnitt (21b).

7. System (5) nach Anspruch 6, wobei der Flansch (32) entlang der Rotationsachse (R-R) einen Sitz (321) zum Aufnehmen des Detektionselements (31) aufweist, wobei der Sitz (321) ist Kommunikation mit der Detektionsöffnung (320) ist.

8. System (5) nach einem der Ansprüche 6 oder 7, wobei das Detektionselement (31) geeignet ist, Rotationswinkel um die Rotationsachse (R-R) ausgehend von einer Nullposition bis zu ±90°, vorzugsweise bis zu ±60° zu erfassen.

9. System (5) nach einem der Ansprüche 6 bis 8, in Kombination mit einem der Ansprüche 1 bis 5, wobei der Flansch (32) und die Rotationsmittel (25) geeignet sind, den zentralen Körper (21), den Stift (10) und den Radträger (51) zu stützten bzw. zu tragen, und zwar an der jeweiligen Komponente, in der die Rotationsvorrichtung (20) untergebracht ist.

10. System (5) nach einem der vorhergehenden Ansprüche, wobei die Gelenkgruppe (1) einen Armflansch (520) umfasst, der geeignet ist, integral mit dem Arm (52) verbunden zu sein, und geeignet ist, mit dem ersten Ende (11) des Stiftes (10) in Dreheingriff gebracht zu werden.

11. System (5) nach einem der vorhergehenden Ansprüche, wobei die Gelenkgruppe (1) einen Radträgerflansch (510) umfasst, der geeignet ist, integral mit dem Radträger (51) verbunden zu sein, und geeignet ist, die Rotationsvorrichtung (20) und die Rotationssensorvorrichtung (30) aufzunehmen und mit diesen in Dreheingriff gebracht zu werden.

12. System (5) nach einem der Ansprüche 9 bis 11, wobei die Radträgergruppe (51) oder der Arm (52) und/oder der Radträgerflansch (510) oder der Armflansch (520) entlang der Rotationsachse (R-R) eine axialsymmetrische Gehäusekavität (500) im Wesentlichen zum Aufnehmen der Gelenkgruppe (1) aufweisen.

13. System (5) nach einem der vorhergehenden Ansprüche, wobei die Radgruppe, die durch ein Einzelaufhängungsradlenksystem (5) verbunden ist, vorne ist.

14. Traktor oder Aufsitzmäher umfassend ein Einzelaufhängungsradlenksystem (5) nach einem der vorhergehenden Ansprüche, wobei das System ein Antriebssystem ist.

15. Traktor oder Aufsitzmäher nach Anspruch 14, wobei das Einzelaufhängungsradlenksystem an der Vorderachse platziert ist.

## Revendications

1. Système de direction à roue suspendue unique (5) d'un véhicule à usage agricole relié à un groupe de roues, dans lequel le système (5) comprend :
- un support de roue (51) pour le groupe de roues ;
- au moins un bras (52) pour le support et l'amortissement du support de roue (51) ; et
- un groupe d'articulation (1) adapté pour permettre la mise en prise entre le support de roue (51) et le bras (52) pour la rotation du support de roue (51) par rapport au bras (52) autour d'un axe de rotation (R-R) ;
dans lequel le système de direction à roue suspendue unique (5) est **caractérisé par le fait que** ledit groupe d'articulation (1) comprend :
i) une broche (10) qui s'étend le long d'un axe de pivot (P-P) entre une première extrémité (11) et une deuxième extrémité sphérique (12) ;
ii) un dispositif de rotation (20) comprenant un corps central (21) dans lequel est ajustée et reliée la deuxième extrémité sphérique (12) de la broche (10) et des moyens de rotation (25) adaptés pour permettre la libre rotation du corps central (21) autour de l'axe de rotation (R-R), dans lequel ledit corps central (21) comprend un boîtier pour sphère (210) délimité par des parois de boîtier (210'), dans lequel la deuxième extrémité sphérique (12) est reliée au corps central (21) au moyen d'une broche transversale (121) qui s'étend le long d'un axe transversal (Y-Y) perpendiculaire à l'axe de rotation (R-R) et passant du centre (C) de la deuxième extrémité sphérique (12) pour se mettre en prise avec lesdites parois de boîtier (210') de telle manière que la broche (10) est libre de tourner autour dudit axe transversal (Y-Y) ;
iii) un dispositif de capteur de rotation (30) comprenant un élément de détection (31) positionné sur l'axe de rotation (R-R) et adapté pour détecter la rotation du corps central (21) autour dudit axe de rotation (R-R) par rapport à celui-ci ;
dans lequel le groupe d'articulation (1) est sensiblement logé dans le support de roue (51) ou bras (52), et la première extrémité est reliée d'un seul tenant respectivement au bras (52) ou au support de roue (51).

2. Système (5) selon la revendication 1, dans lequel le corps central (21) a, radialement à l'opposé par rapport à l'axe de rotation (R-R), sur les parois de boîtier (210'), deux fentes de broche (215) qui s'étendent parallèlement à l'axe de rotation (R-R), dans lesquelles les extrémités de la broche transversale (121) sont logées, libres de se déplacer.

3. Système (5) selon l'une quelconque des revendications 1 ou 2, dans lequel le corps central (21) comprend un élément de butée (212) adapté pour maintenir le centre (C) fixé le long de l'axe de rotation (R-R).

4. Système (5) selon l'une quelconque des revendications précédentes, dans lequel les moyens de rotation (25) comprennent un ou plusieurs roulements (251), ayant la surface intérieure (251') reliée fonctionnellement au corps central (21) et la surface extérieure (251") reliée fonctionnellement au composant dans lequel le dispositif de rotation est logé.

5. Système (5) selon l'une quelconque des revendications précédentes, dans lequel le corps central (21) comprend une première portion (21a) et une deuxième portion supérieure (21b) adaptées pour se mettre en prise l'une avec l'autre le long de l'axe de rotation (R-R), de manière à délimiter le boîtier pour sphère (210).

6. Système (5) selon l'une quelconque des revendications précédentes, dans lequel le dispositif de capteur de rotation (30) comprend une bride (32) pour fixer le dispositif de capteur de rotation (30), dans lequel la bride (32) a, le long de l'axe de rotation (R-R), une ouverture de détecteur (320) à travers laquelle est inséré l'élément de détection (31) pour s'interfacer avec le corps central (21), de préférence avec une deuxième portion (21b).

7. Système (5) selon la revendication 6, dans lequel la bride (32) a, le long de l'axe de rotation (R-R), un siège (321) pour loger l'élément de détection (31), dans lequel ledit siège (321) est en communication avec l'ouverture de détection (320).

8. Système (5) selon l'une quelconque des revendications 6 ou 7, dans lequel l'élément de détection (31) est adapté pour détecter des angles de rotation autour de l'axe de rotation (R-R), partant d'une position zéro, jusqu'à ±90°, de préférence jusqu'à ±60°.

9. Système (5) selon l'une quelconque des revendications 6 à 8, en combinaison avec l'une quelconque des revendications 1 à 5, dans lequel la bride (32) et les moyens de rotation (25) sont adaptés pour supporter le corps central (21), la broche (10) et le support de roue (51), sur le composant respectif dans lequel le dispositif de rotation (20) est logé.

10. Système (5) selon l'une quelconque des revendications précédentes, dans lequel le groupe d'articulation (1) comprend une bride de bras (520) adaptée pour être reliée d'un seul tenant au bras (52) et adaptée pour être mise en prise en rotation avec la première extrémité (11) de la broche (10).

11. Système (5) selon l'une quelconque des revendications précédentes, dans lequel le groupe d'articulation (1) comprend une bride de support de roue (510) adaptée pour être reliée d'un seul tenant au support de roue (51) et adaptée pour loger et être mise en prise en rotation avec le dispositif de rotation (20) et avec le dispositif de capteur de rotation (30).

12. Système (5) selon l'une quelconque des revendications 9 à 11, dans lequel le groupe de supports de roue (51) ou le bras (52) et/ou la bride de support de roue (510) ou la bride de bras (520) ont, le long de l'axe de rotation (R-R), une cavité de boîtier axialement symétrique (500), sensiblement pour loger le groupe d'articulation (1).

13. Système (5) selon l'une quelconque des revendications précédentes, dans lequel le groupe de roues, relié par un système de direction à roue suspendue unique (5) est à l'avant.

14. Tracteur ou tondeuse autoportée comprenant un système de direction à roue suspendue unique (5) selon l'une quelconque des revendications précédentes, dans lequel le système est un système d'entraînement.

15. Tracteur ou tondeuse autoportée selon la revendication 14, dans lequel le système de direction à roue suspendue unique est placé sur l'essieu avant.
